# EUROPÄISCHE PATENTANMELDUNG

(11) **EP 1 240 978 A1**
(43) Veröffentlichungstag der Anmeldung: **18.09.2002**
(21) Anmeldenummer: 02000912.2
(22) Anmeldetag: 16.01.2002
(51) Int. Cl.: B24D 18/00, B24B 37/04, B29C 43/36, B29C 47/54

(54) **Verfahren zur Herstellung eines Polierpastenriegels**

(30) Priorität: 22.02.2001 DE 10108450
(71) Anmelder: Lippert-Unipol GmbH, 74925 Epfenbach (DE)
(72) Erfinder: Pietsch, Franz, 73326 Deggingen (DE)
(74) Vertreter: KEIL & SCHAAFHAUSEN

(57) **Zusammenfassung**

Die vorliegende Erfindung betrifft Verfahren zur Herstellung eines Polierpastenriegels, bei dem die Inhaltsstoffe des Polierpastenriegels als Trockenmischung vorliegend unter Anwendung von Druck in Form gebracht werden, sowie einen danach hergestellten Pastenriegel.

## Beschreibung

Die vorliegende Erfindung betrifft Verfahren zur Herstellung eines z. B. stabförmigen Polierpastenriegels.

Bei der mechanischen Oberflächenbearbeitung mittels eines Polierwerkzeuges werden zur Erzeugung eines bestimmten Oberflächenaspektes einen Abrasivstoff enthaltende Poliermittel bzw. -pasten zugegeben, die je nach den Verfahrenserfordernissen fest oder flüssig sind. Insbesondere die Herstellung fester Polierpasten, die je nach Art des Polierwerkzeuges und je nach Art der Zuführung der Polierpaste in Form von Stangen, Stäben, Blöcken oder Riegeln unterschiedlichster Abmessungen benötigt werden, ist nach wie vor ein aufwendiges Verfahren, das im wesentlichen aus manuellen Arbeitsschritten besteht.

Üblicherweise erfolgt die Herstellung einer festen Paste in der Weise, dass zunächst bei Raumtemperatur im festen Aggregatzustand vorliegende Fettbestandteile der Polierpaste geschmolzen, mit den Abrasivstoffen gemischt, in das entsprechende Formwerkzeug eingebracht und schließlich nach dem Erkalten ausgeformt werden. Hierzu ist entsprechend den unterschiedlichsten Gestaltungen und Abmessungen der Pasten eine Vielzahl an Formwerkzeugen erforderlich. Lediglich beispielhaft sind in diesem Zusammenhang Mehrfachformen für rechteckige Querschnitte bestehend aus mehreren Trennwänden und Abstandshaltem, schalenförmige Formen mit meist trapezförmigen Querschnitt zur leichteren Entformung, rohrförmige einteilige und teilbare Formen unterschiedlichsten Querschnitts sowie von Stützformen gehaltene Papierbeutel als sogenannte verlorene Form, zu nennen.

Sämtliche derzeit bekannte Verfahren zur Herstellung fester Polierpasten weisen bei nahezu jedem Prozessschritt Nachteile auf, die zu großen Qualitätsunterschieden zwischen den einzelnen Produktionschargen führen und sich insbesondere negativ auf die Qualität der erzeugten Pasten auswirken.

So müssen bei dem ersten Prozessschritt der derzeit bekannten Verfahren zur Herstellung der Ausgangsmischung sämtliche Bestandteile auf eine geeignete Temperatur erwärmt werden, um eine Viskosität zu erhalten, die eine gleichmäßige Durchmischung der einzelnen Komponenten und eine möglichst vollständige Entleerung der Mischer ermöglicht, aber eine Entmischung und/oder Absetzen der schweren Bestandteile vermeidet. Da diese gegenläufigen Anforderungen meist nur ungenügend erfüllt werden können, kommt es häufig zu Störungen, zusätzlichem Arbeitsaufwand beim Entleeren und Reinigen der Mischer und zu Qualitätsschwankungen. Des weiteren ist die bei dieser Prozessstufe einzubringende Wärmeenergie, die später den gegossenen Pastenriegeln wieder entzogen werden muss, beträchtlich.

Bei den nachfolgenden Prozessschritten, nämlich der Formgebung und Entformung, handelt es sich im wesentlichen um manuelle Arbeitsgänge, die sich aufgrund der Formen- und Typenvielfalt nur schwer wirtschaftlich rentabel automatisieren lassen. In Abhängigkeit von dem Feststoffanteil und den verwendeten Fetten sind die aufgeschmolzenen Pasten mehr oder weniger flüssig, wodurch die einwandfreie Formfüllung wesentlich beeinträchtigt wird. Während dickflüssige Pasten oft nicht gießfähig sind und daher geschöpft werden müssen, besteht bei dünnflüssiger Schmelze die Gefahr des Entmischens und Absetzens der schweren Bestandteile. Manche Pasten neigen stark zum Schwinden, weshalb rechtzeitig vor dem Erstarren der oberen Schicht nachdosiert werden muss, um ein späteres Abplatzen zu vermeiden. Wieder andere Pasten neigen zum Quellen, wodurch ein genaues Dosieren erschwert wird und eventuell zuviel eingefüllter Überstand wieder entfernt werden muss.

Das Abkühlen der gefüllten Formen dauert je nach Formgestalt und -masse teilweise viele Stunden, so dass für einen ausreichend hohen Produktionsausstoß eine große Anzahl gleicher Formen benötigt wird. Um dem zu begegnen, wird in einigen bekannten Verfahren der Abkühlvorgang durch intensive Kühlung mit Wasser oder Kühlluft beschleunigt. Dabei besteht die Gefahr der Bildung von Einfallstellen, Lunkem und Rissen, welche die Bruchfestigkeit herabsetzen, so dass häufig die Pastenriegel zerbrechen und somit unbrauchbar beim Verbraucher ankommen.

Femer ist der Prozessschritt des Entformens bei den bekannten Verfahren mit großem Aufwand verbunden. Während sich die trapezförmigen Formen wegen der starken Ausformschräge meist noch relativ leicht entformen lassen, müssen die modular aufgebauten Formen für rechteckige Formlinge für das Entformen vollständig in die Einzelteile zerlegt werden. Die durch Undichtigkeit in den Trennelementen oder durch erstarrtes, abgesunkenes Material an den oberen Rändern entstehenden Grate sowie die durch Überfüllung resultierenden Maßungenauigkeiten müssen manuell von den Formlingen entfernt werden. Es versteht sich von selbst, dass gerade diese manuellen Prozessschritte zu einer ungenügenden Reproduzierbarkeit des Verfahrens führen und den insbesondere an Pastenriegel für die automatische Zuführung gestellten hohen Anforderungen an Maßgenauigkeit kaum genügen.

Aufgabe der vorliegenden Erfindung ist es, ein Verfahren zur Verfügung zu stellen, welches eine kostengünstige und weitgehend automatisierbare Herstellung von Pastenriegeln hoher und gleichmäßiger Qualität ermöglicht.

Die Aufgabe wird erfindungsgemäß durch die Bereitstellung eines Verfahrens gelöst, bei dem die Inhaltsstoffe des Polierpastenriegels als Trockenmischung unter Anwendung von Druck in Form gebracht werden.

Als Trockenmischung im Sinne der vorliegenden Erfindung wird jede rieselfähige Mischung verstanden, in welcher die einzelnen Komponenten in fester Form vorliegen und miteinander vermischt sind. Für das erfindungsgemäße Verfahren können die dem Fachmann zu diesem Zweck geeignet erscheinenden Trockenmischungen verwendet werden, beispielsweise eine Mischung aus etwa 70 % Poliertonerde mit einem mittleren Korndurchmesser von etwa 35 bis 55 um und etwa 30 % Parafinpulver mit Komgrößen von etwa 0,1 bis 0,4 mm.

Bei einer besonderen Ausführungsweise der Erfindung wird die Trockenmischung bei Raumtemperatur (d. h. ohne Zufuhr von Wärme) in oder durch einen formgebenden Raum gepresst. Überraschenderweise hat sich gezeigt, dass eine die üblichen Inhaltsstoffe - z. B. Fett und Abrasivstoffe - eines Polierpastenriegels enthaltende Trockenmischung alleine durch die Anwendung von hohem Druck, ohne jegliche Zufuhr von Wärmeenergie, hinreichend verdichtet und dadurch in Form gebracht werden kann. So kann insbesondere auf einfache Weise erreicht werden, dass beim Hindurchdrücken der Trockenmischung durch eine formgebende Düse ein kontinuierlich geformter Pastenstrang die Düse verlässt, der kompakt und maßhaltig ist. Hierbei macht man sich zu Nutze, dass beim Verdichten in einer Hohlform oder beim Pressen (Extrudieren) durch eine Düse ein Teil der angewendeten mechanische Energie in Wärmeenergie umgesetzt wird, woraus eine geringe Temperaturerhöhung des Trockenmischungsformkörpers, z. B. -stranges gegenüber dem Ausgangsmaterial von z. B. 10 bis 15°C resultiert.

Vorzugsweise wird bei dem Press- oder Verdichtvorgang ein Druck von 200 bis 400 bar auf die Trockenmischung ausgeübt. Bei Verwendung einer Düse als formgebenden Raum stellt sich z. B. in Abhängigkeit von der Fließfähigkeit des verdichtenden Materials der Trockenmischung, des Düsenquerschnittes und der Durchsatzmenge in der Düse ein Staudruck ein, der von dem Presskolben überwunden werden muss.

Für den eigentlichen Press- oder Verdichtvorgang, d. h. das Einpressen der Trockenmischung in eine Hohlform oder das Durchpressen der Trockenmischung durch eine formgebende Düse, kann prinzipiell jede dem Fachmann zu diesem Zweck bekannte Vorrichtung verwendet werden. Als besonders praktisch hat sich jedoch die Verwendung eines Kolbenextruders erwiesen. Die Trockenmischung wird dabei über einen Einfülltrichter direkt in den Zylinderraum eingeführt und dann mittels eines hydraulischen Druckes von 150 bis 300 bar verdichtet. Das gegenüber dem Kolben liegende Ende des Zylinderraumes kann nach sukzessiver Querschnittsreduktion in einem Kaliber als formgebende Düse münden, dessen Querschnitt dem des zu erzeugenden Pastenriegels entspricht. Um einen höheren Ausstoß zu erhalten, können auch Kolbenextruder verwendet werden, deren Zylinderraum in zwei oder noch mehr formgebende Düsen mündet.

Durch geringen Metallabrieb an der Wandung des formgebenden Raumes, z. B. des Kalibers kann die Oberfläche des Pastenriegels eine Verfärbung erhalten, die allerdings keine Auswirkungen auf die Funktion des Pastenriegels hat, sondern lediglich das Aussehen beeinträchtigt. Diese Verunreinigungen können nach dem Press- oder Verdichtvorgang mittels eines Schabwerkzeuges beseitigt werden, so z. B. durch ein unmittelbar hinter der Düse angebrachtes, nahezu den gleichen Querschnitt des Kalibers aufweisendes, Schabwerkzeug. Da die Verunreinigungen nur innerhalb einer hauchdünnen Schicht an der Oberfläche des Pastenriegels vorhanden sind, genügt ein Schabwerkzeug mit einem lediglich geringfügig kleinerem Querschnitt als dem des Kalibers, um eine saubere, von den Verunreinigungen befreite Oberfläche zu erhalten. Die geometrische Gestalt des formgebenden Raumes, wie der Düse und des Schabwerkzeuges kann in Abhängigkeit von der gewünschten Form des Pastenriegels frei gewählt und beispielsweise rund, oval, rechteckig, quadratisch, trapezförmig, polygonal, freigeformt oder eine Kombination dieser geometrischen Formen sein.

Bei Herstellung des Pastenriegels mittels Düse als formgebenden Raum und Kolbenextruder kann die Länge des Pastenriegels durch eine Unterbrechung der Kolbenhubbewegung auf jeden beliebigen Wert eingestellt werden. Praktischerweise werden Pastenstränge mit einer Länge von einigen Metern angefertigt, die dann unmittelbar hinter der Düse oder dem Schabwerkzeug mit einer Trennvorrichtung abgelängt werden und in einem nachfolgenden Bearbeitungsschritt mit einer Trennvorrichtung in einzelne Polierpastenriegel gewünschter Länge unterteilt werden können.

Mit dem erfindungsgemäßen Verfahren werden Polierpastenriegel erhalten, die sich durch eine saubere und glatte Oberfläche sowie durch einen über die gesamte Länge des Riegels erhaltenen maßhaltigen Querschnitt ohne jegliche Einfallstellen, Buckel, Risse, Hohlräume, wie Luftblasen, Seigerungen oder ähnliche Unregelmäßigkeiten der Oberfläche auszeichnen. Insbesondere weisen die erfindungsgemäß hergestellten Pastenriegel keine Grate auf, wie sie üblicherweise bei den bisher bekannten Gießverfahren in modular aufgebauten Formen entstehen und von den entsprechenden Pastenriegeln mit großem Aufwand entfernt werden müssen.

Des Weiteren ist es möglich, durch entsprechende Ausgestaltung der Profilkanten des formgebenden Raumes, wie des Düsenkalibers und/oder des nachgeschalteten Schabwerkzeuges, die Kanten beispielsweise eines rechteckigen Pastenriegels zu verrunden. Eine solche Ausführung ist besonders vorteilhaft, da so die Gefahr des Abplatzens der Kanten der Pastenriegel beim anschließenden Verpacken, beim Transport oder bei dem Anwender vermieden wird.

Nach einer besonderen Ausführungsweise der vorliegenden Erfindung wird die Trockenmischung z. B. in eine oben offene Hohlform gefüllt und ohne jegliche Zufuhr von Wärmeenergie lediglich unter einem Druck von 200 bis 400 bar mittels einem Pressstempel zu einem kompakten maßhaltigen Pastenriegel verpresst.

Für diesen Pressvorgang kann prinzipiell jede Hydraulikpresse verwendet werden, deren erforderliche Presskraft sich aus dem für die Verpressung erforderlichen Druck und der Formenquerschnittsfläche ergibt. Bei einem Pastenriegel von z. B. 500 mm Länge und 40 mm Breite beträgt die erforderliche Presskraft 40 bis 80 Mp.

Als besonders vorteilhaft erweist sich allerdings die Verwendung einer Doppelkolbenpresse. Dabei bewegt der obere Kolben den eigentlichen Pressstempel, während der untere Kolben einen Stempel bewegt, der den Boden der Hohlform bildet. Dieser untere Pressstempel wird in der Hohlform so positioniert, dass der darüber befindliche Raum dem erforderlichen Füllvolumen für die Trockenmischung entspricht. Nach dem Verpressen der Trockenmischung dient der untere Pressstempel als Auswerfer für den Pressling.

Von Vorteil gegenüber einem Extrusionsverfahren ist, dass bei dem Pressverfahren an den Stirnseiten der Pressstempel Gravuren eingebracht werden können, die sich als Spiegelbild auf der Oberfläche der Pastenriegel übertragen. Damit wird es möglich, das Produkt direkt z. B. mit einem Kennzeichen zu versehen. Die Pressstempel können aber auch so gestaltet werden, dass eine mehr oder weniger große Fase oder anders vorteilhaft geformte Kanten an den Pastenriegeln erzeugt werden.

Ein besonderer Vorteil des mittels Düse als formgebendem Raum ausgeführten erfindungsgemäßen Verfahrens ist, dass kein großes Formenarsenal erforderlich ist, sondern lediglich für jeden Strangquerschnitt ein Kaliber und ggf. das dazugehörige Schabwerkzeug benötigt wird. Die Länge der Pastenriegel wird durch Teilung der Stränge mittels eines Sägeschnitts bestimmt. Bei den wenigen bekannt gewordenen automatischen Gießanlagen mit intensiver Kühlung ist wegen der erforderlichen Zeit für das Erkalten eines Fertigungsloses eine Vielzahl gleich großer Formen erforderlich. Dies ist erfindungsgemäß auch bei Verwendung eines formgebenden Hohlraumes, der keine Düse ist, wegen der geringen Erwärmung der Trockenmischung bei Überführung in einen Polierpastenriegel nicht erforderlich.

Ein noch weiterer Vorteil der vorliegenden Erfindung insbesondere bei Verwendung einer Düse als formgebender Raum und eines Kolbenextruders liegt darin, dass ein Reinigen von Formen vollständig entfällt. Bei dem Wechsel des Pastentyps wird lediglich das im Zylinderraum befindliche restliche Material der vorherigen Trockenmischung herausgedrückt und eine neue Trockenmischung eingefüllt. Das neu verpresste Material schiebt dann das in der Düse befindliche restliche Material der vorhergegangenen Produktionscharge vor sich her. Sofern lediglich der Querschnitt des herzustellenden Pastenriegels bei gleichem Pastentyp geändert werden soll, wird lediglich das Kaliber gegen ein anderes Kaliber ausgetauscht. In dem neuen Kaliber verbliebene Materialmengen von einer früheren Fertigungscharge werden ebenfalls als Erstes ausgepresst, so dass eine Reinigung entfällt. Entsprechendes gilt für andere formgebende Räume.

Weiterer Gegenstand der vorliegenden Erfindung sind Polierpastenriegel, welche mit zuvor beschriebenen erfindungsgemäßen Verfahren hergestellt worden sind.

Die erfindungsgemäßen Polierpastenriegel zeichnen sich durch eine saubere und glatte Oberfläche aus sowie durch einen über die gesamte Länge des Riegels erhaltenen maßhaltigen Querschnitt ohne jegliche Einfallstellen, Buckel, Risse, Hohlräume, wie Luftblasen, Seigerungen oder ähnliche Unregelmäßigkeiten der Oberfläche. Insbesondere weisen die erfindungsgemäß hergestellten Pastenriegel keine Grate auf, wie sie üblicherweise bei den bisher bekannten Gießverfahren in modular aufgebauten Formen entstehen und von den entsprechenden Pastenriegeln mit großem Aufwand entfernt werden müssen.

Weitere Ziele, Merkmale, Vorteile und Anwendungsmöglichkeiten der Erfindung ergeben sich aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: eine schematische Darstellung einer Produktionsanlage zur Herstellung von stabförmigen Pastenriegeln gemäß einer Ausführungsweise der vorliegenden Erfindung (Extrudierverfahren),
- Fig. 2.1: eine schematische Darstellung einer Produktionsanlage zur Herstellung von stabförmigen Pastenriegeln gemäß einer anderen Ausführungsweise der vorliegenden Erfindung (Pressverfahren),
- Fig. 2.2: schematisch den Verfahrensablauf (Verfahrensschritte A, B und C) des mit einer Anlage nach Fig. 2.1 ausgeführten Pressverfahrens,
- Fig. 3: einen schematischen Längs- und Querschnitt eines Pastenriegels, der in einer waagrecht liegenden und aus einzelnen Formteilen zusammengesetzten Form gemäß dem Stand der Technik gegossen wurde,
- Fig. 4: einen schematischen Längs- und Querschnitt eines Pastenriegels, der in einer waagrecht liegenden schalenförmigen Form gemäß dem Stand der Technik gegossen wurde,
- Fig. 5: einen schematischen Längs- und Querschnitt eines Pastenriegels, der in einer vertikal stehenden Gussform gemäß dem Stand der Technik gegossen wurde,
- Fig. 6: eine schematische, perspektivische Darstellung eines Pastenriegels, hergestellt nach dem erfindungsgemäßen Extrudierverfahren,
- Fig. 7.1: eine schematische, perspektivische Darstellung eines Pastenriegels, hergestellt nach dem erfindungsgemäßen Pressverfahren,
- Fig. 7.2: einen schematischen Querschnitt eines Pastenriegels, hergestellt nach dem erfindungsgemäßen Pressverfahren, und

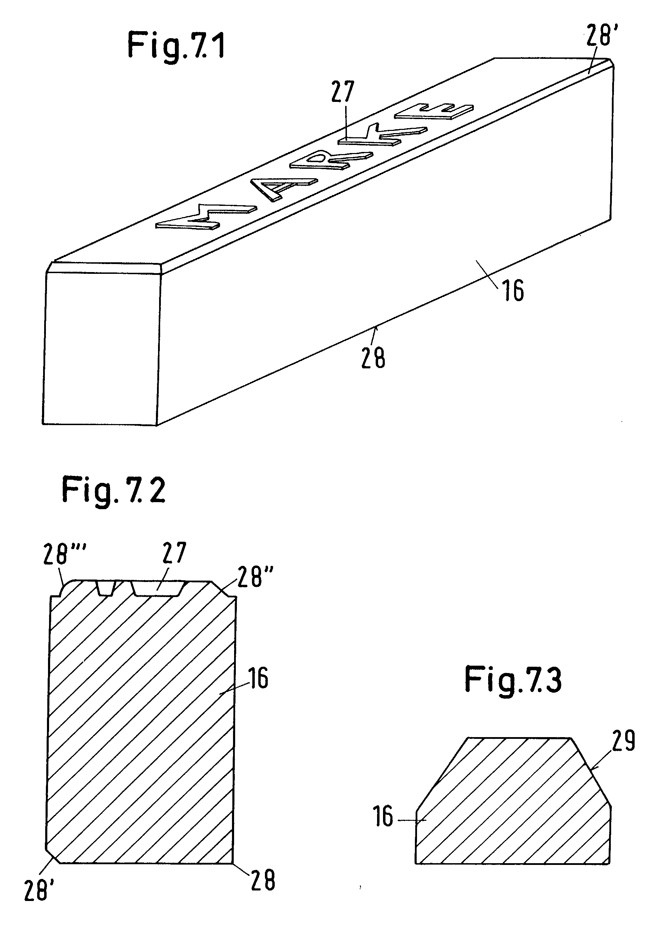

- Fig. 7.2: einen schematischen Querschnitt eines Pastenriegels in Trapezform, hergestellt nach dem erfindungsgemäßen Pressverfahren.

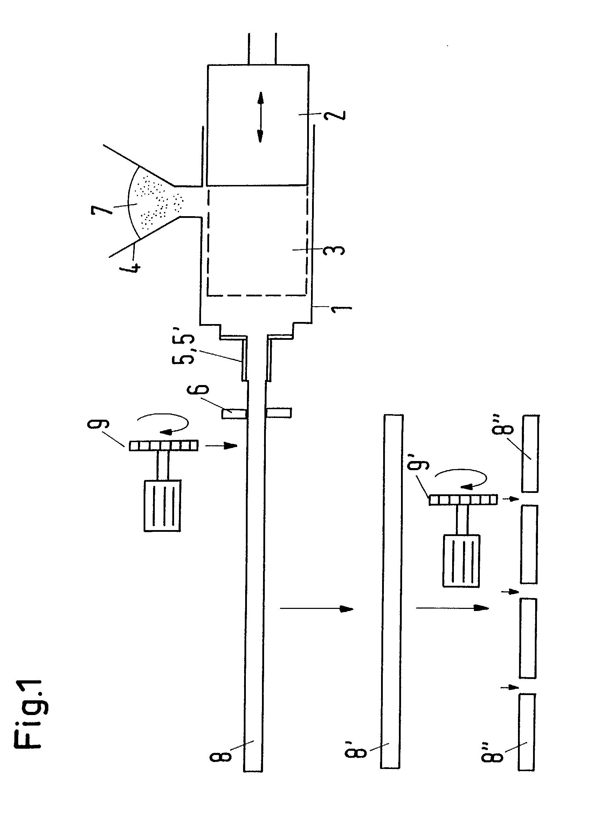

Die in der Figur 1 dargestellte Produktionsanlage zur Herstellung von stabförmigen Polierpastenriegeln nach dem Extrudierverfahren gemäß der vorliegenden Erfindung weist einen Kolbenextruder 1, ein Schabwerkzeug 6 und eine Trennvorrichtung 9 auf. Der Kolbenextruder 1 weist ein zylindrisches Gehäuse auf, dessen Querschnitt sich in Richtung der Bewegung eines Presskolbens 2 gesehen stufenweise reduziert und in einem Formkaliber 5' als Düse 5 mündet, dessen Querschnitt dem eines zu erzeugenden Pastenstranges 8 entspricht. Auf dem Kolbenextruder 1 ist, in Richtung der Kolbenhubbewegung gesehen vorne, ein Einfülltrichter 4 für eine die Inhaltsstoffe - z. B. Fett und Abrasivstoffe - der Pastenriegel enthaltenden Trockenmischung 7 vorgesehen, dessen untere Öffnung direkt in einen Zylinderraum 3 mündet. Durch die Bewegung des in dem Zylinderraum 3 verschieblichen Presskolbens 2 in Richtung der Düse 5 wird die eingefüllte Trockenmischung 7 verdichtet und als kontinuierlich geformter Pastenstrang kompakt und maßhaltig aus dem Formkaliber 5' gepresst. Der Pastenstrang 8 passiert anschließend ein unmittelbar hinter dem Formkaliber 5' angeordnetes Schabwerkzeug 6 mit einem beispielsweise nur geringfügig kleineren Querschnitt als dem des Pastenstranges 8, so dass die durch geringen Metallabrieb des Formkalibers 5' verursachte Verfärbung des Pastenstranges 8 entfernt und eine glatte, saubere Oberfläche erreicht wird. Um einen Pastenriegel 8" definierter Länge zu erhalten, wird zunächst ein Stück des kontinuierlichen Pastenstranges 8 mittels einer Trennvorrichtung 9 abgetrennt, um danach das so abgetrennten Pastenstrangstück 8' mittels einer Trennvorrichtung 9' in endgültige Pastenriegel 8" zu unterteilen.

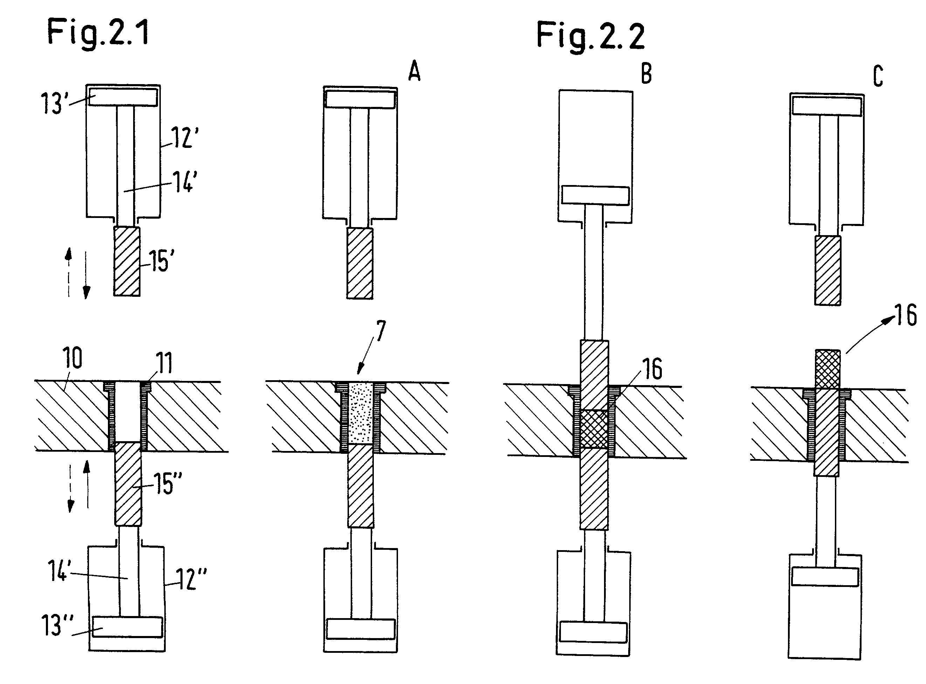

Eine in Figur 2.1 dargestellte Ausführungsform einer Produktionsanlage zur Herstellung von stabförmigen Pastenriegeln nach dem Pressverfahren gemäß der vorliegenden Erfindung weist einen Pressentisch 10 auf, darin eingelassen eine einzelne ein Formennest bildende Hohlform 11. Denkbar sind aber auch mehrere neben- oder hintereinander angeordnete Formennester 11.

Die Abmessungen der Hohlform 11 richten sich bezüglich der horizontalen Erstreckung nach der Länge und Breite der zu erzeugenden Pastenriegel, bezüglich der Höhe der Hohlform 11 nach dem für die Erzeugung eines kompakten Pastenriegels 16 mit bestimmter Höhe erforderlichen Schüttvolumens der einzufüllenden Trockenmischung 7. Gebräuchliche Abmessungen für Polierpastenriegel sind z. B. Länge 500 mm, Breite 40 mm, Höhe 80 mm.

In einem nicht dargestellten Pressengestell sind oberer und unterer Hydraulikzylinder 12' und 12" mit Kolben 13' und 13" angeordnet.

Entsprechend der Anzahl vorgesehener Hohlformen 11 sind gleich viel obere Pressstempel 15' und untere Pressstempel 15" vorgesehen. Die Abmessungen der Querschnitte der Pressstempel 15', 15" entsprechen denen des Querschnitts der Hohlform 11.

Die Hydraulikkolben 13', 13" bewegen die Pressstempel 15', 15" mittels Kolbenstangen 14', 14" und erforderlichenfalls daran angebrachter (nicht dargestellter) Pressstempelträgerplatten für die Aufnahmen mehrerer Pressstempel 15', 15".

Figur 2.2 zeigt die Phasen A, B und C eines grob dargestellten Verfahrensablaufs beim erfindungsgemäßen Pressverfahren. Bei A wird in die Hohlform 11 die erforderliche Menge Trockenmischung 7 eingefüllt, bei B erfolgt deren Verpressung zu einem kompakten Pastenriegel 16 als Pressling. Bei C wird der Pastenriegel 16 durch den unteren Pressstempel 15" ausgeworfen und von Hand oder maschinell entnommen.

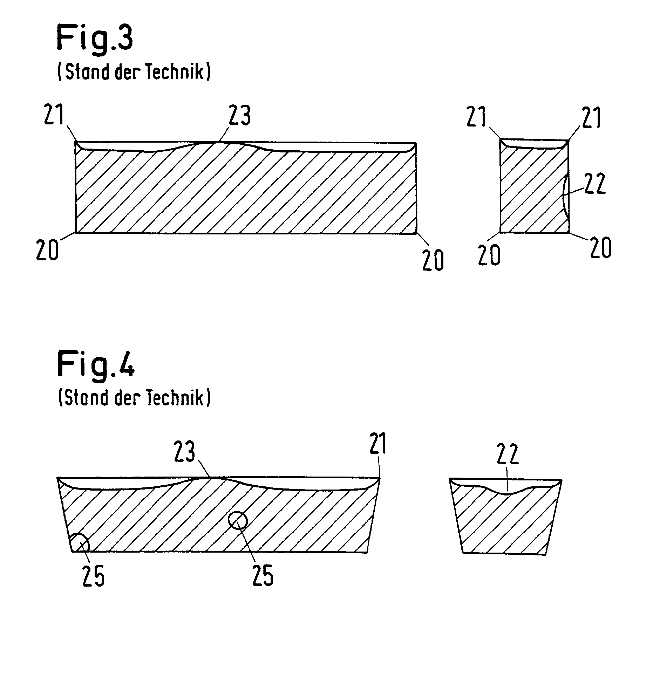

Pastenriegel, die durch bisher bekannte Verfahren erhalten werden, weisen in ihrer Form allesamt mehr oder weniger stark ausgeprägte Unregelmäßigkeiten auf. Beispielsweise ist die Oberfläche eines in einer waagrecht liegenden und aus einzelnen Formteilen zusammengesetzten Form nach einem Verfahren gemäß dem Stand der Technik gegossenen Pastenriegels, wie in der Figur 3 anhand des Längs- und Querschnitts schematisch dargestellt, an seinen unteren Ecken mit Graten 20, die typischerweise durch Undichtigkeiten in den Trennelementen entstehen, mit überstehenden Rändern 21, mit Einfallstellen 22, die durch intensive Kühlung während des Abkühlvorgangs entstehen, sowie mit buckelförmigen Überhöhungen 23 versehen.

Ein ähnlich unregelmäßiger Pastenriegel wird erhalten, wenn man das gleiche Verfahren mit einer waagrecht liegenden schalenförmigen Form durchführt. Wie aus dem in der Figur 4 schematisch dargestellten Längs- und Querschnitt ersichtlich, weist auch dieser Pastenriegel überstehende Ränder 21, eine buckelförmige Überhöhung 23 und eine Einfallstelle 22 auf.

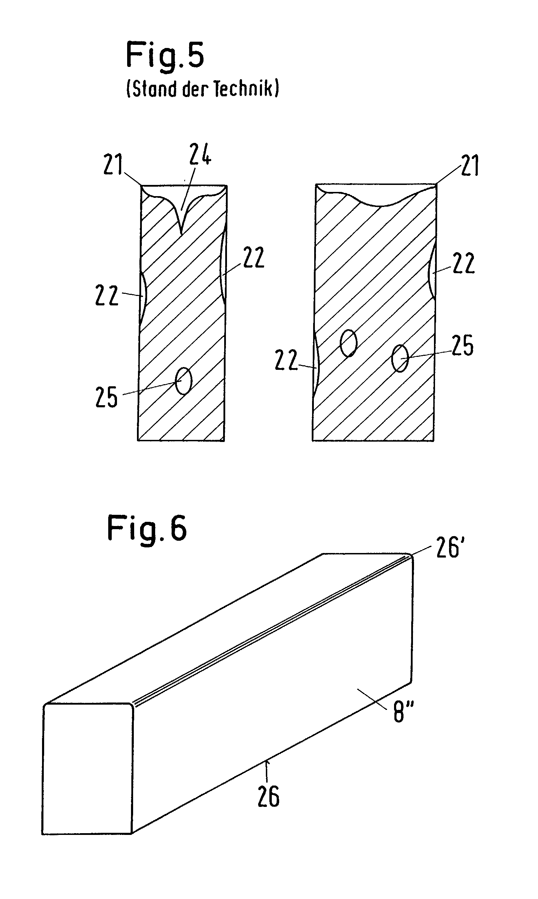

Nicht anders sieht das Ergebnis aus, wenn in dem gleichen Verfahren eine vertikal stehenden Gussform verwendet wird, wie anhand des schematischen Längs- und Querschnitt des entsprechenden Pastenriegels in Figur 5 dargestellt. Neben überstehenden Rändern 21 und Einfallstellen 22 sind zudem eine trichterförmig erstarrte Oberfläche 24 und Lufteinschlüsse 25 zu beobachten.

Mit den erfindungsgemäßen (Extrudier- und Press-) Verfahren werden, wie in den Figuren 6 und 7 schematisch dargestellt, Polierpastenriegel 8", 16 erhalten, die sich durch eine regelmäßige und glatte Oberfläche, durch eine Maßhaltigkeit des Querschnittsprofils über die gesamte Länge und durch ein Fehlen von Graten, Einfallstellen, Buckeln, Lufteinschlüssen sowie durch schroffe Kühlung entstandene Spannungen, welche die Bruchfestigkeit herabsetzen, auszeichnen.

Die Längskanten der mittels Extrudierverfahren hergestellten Pastenriegel 8" können scharf 26 oder verrundet 26' sein.

Bei den nach dem Pressverfahren erzeugten Pastenriegeln 16 ist es möglich, wie in den Figuren 7.1 bis 7.3 dargestellt, Ober- und/oder Unterseite mit Prägungen 27 zu versehen. Die Kanten können scharf 28, angefast 28', als Stufenkante mit Anschrägung 28" oder als verrundete Stufenkante 28"' ausgeführt sein. Eine Vielzahl von Abwandlungen und Kombinationen ist denkbar. So können z. B. die Anschrägungen so stark ausgeführt werden, dass der Querschnitt des Pastenriegels Trapezform 29 annimmt.

### Bezugszeichenliste:

- 1: Kolbenextruder
- 2: Presskolben
- 3: Zylinderraum
- 4: Einfülltrichter
- 5, 5': Düse, Formkaliber
- 6: Schabwerkzeug
- 7: Trockenmischung
- 8: Pastenstrang
- 8': abgetrenntes Pastenstrangstück
- 8": Pastenriegel (Pastenstrangteilstück)
- 9: Trennvorrichtung für den Pastenstrang
- 9': Trennvorrichtung für den Pastenriegel
- 10: Pressentisch
- 11: Hohlformen
- 12', 12": oberer und unterer Hydraulikzylinder
- 13', 13": oberer und unterer Hydraulikkolben
- 14', 14": obere und untere Kolbenstange
- 15', 15": oberer und unterer Pressstempel
- 16: Pastenriegel (Pressling)
- 20: Grate
- 21: überstehende Ränder
- 22: Einfallstellen
- 23: Überhöhungen
- 24: trichterförmig erstarrte Oberfläche
- 25: Lufteinschlüsse
- 26, 26': scharfe bzw. verrundete Längskanten
- 27: Prägung
- 28: scharfe Kante
- 28': angefaste Kante
- 28": schräge Stufenkante
- 28"': verrundete Stufenkante
- 29: trapezförmige Abschrägung

## Patentansprüche

1. Verfahren zur Herstellung eines Polierpastenpastenriegels, **dadurch gekennzeichnet, dass** die Inhaltsstoffe des Polierpastenriegels als Trockenmischung unter Anwendung von Druck in Form gebracht werden.

2. Verfahren nach Anspruch 1, **dadurch gekennzeichnet, dass** die Trockenmischung bei Raumtemperatur (d. h. ohne Zufuhr von Wärme), z. B. in oder durch einen formgebenden Raum, gepresst wird.

3. Verfahren nach Anspruch 2, **dadurch gekennzeichnet, dass** als formgebender Raum eine Düse dient, durch welche die Trockenmischung hindurchgedrückt wird.

4. Verfahren nach Anspruch 2, **dadurch gekennzeichnet, dass** als formgebender Raum eine Hohlform dient, in welcher die Trockenmischung verdichtet wird.

5. Verfahren nach einem der Ansprüche 1 bis 4, **dadurch gekennzeichnet, dass** bei dem Press- oder Verdichtvorgang ein Druck von 200 bis 400 bar auf die Trockenmischung ausgeübt wird.

6. Verfahren nach einem der Ansprüche 1 bis 5, **dadurch gekennzeichnet, dass** der Press- oder Verdichtvorgang in einem Kolbenextruder bzw. mittels eines Kolbenextruders oder einer Hydraulikpresse durchgeführt wird.

7. Verfahren nach Anspruch 6, **dadurch gekennzeichnet, dass** ein Kolbenextruder verwendet wird, dessen Zylinderraum in eine oder mehrere Düsen mündet.

8. Verfahren nach einem der Ansprüche 1 bis 7, **dadurch gekennzeichnet, dass** nach dem Press- oder Verdichtvorgang die Oberfläche des Polierpastenriegels mit einem Schabwerkzeug nachbearbeitet wird.

9. Verfahren nach Anspruch 8, **dadurch gekennzeichnet, dass** ein Schabwerkzeug verwendet wird, welches eine dem formgebenden Raum, z. B. dem Querschnitt der formgebenden Düse, entsprechende Form aufweist.

10. Verfahren nach Anspruch 8 oder 9, **dadurch gekennzeichnet, dass** ein Schabwerkzeug verwendet wird, welches einen geringfügig kleineren Querschnitt als der verwendete formgebende Raum, z. B. die Düse, aufweist.

11. Verfahren nach einem der Ansprüche 1 bis 10, **dadurch gekennzeichnet, dass** ein formgebender Raum, z. B. eine Düse, und/oder ein Schabwerkzeug verwendet werden/wird, deren geometrische Gestalt z. B. deren Öffnungsquerschnitt, wahlweise rund, oval, rechteckig, quadratisch, trapezförmig, polygonal oder freigeformt ist.

12. Verfahren nach Anspruch 11, **dadurch gekennzeichnet, dass** ein formgebender Raum, z. B. eine Düse, und/oder ein Schabwerkzeug verwendet werden/wird, deren Querschnitt aus einer Kombination der geometrischen Gestalten besteht.

13. Verfahren nach einem der vorhergehenden Ansprüche, **dadurch gekennzeichnet, dass** ein formgebender Raum, z. B. eine Düse, und/oder ein Schabwerkzeug verwendet werden/wird, deren Profilkanten zu einer scharfen, verrundeten, angefasten, stufigen oder/und trapezartigen Form der Kanten des Polierpastenriegels führen.

14. Polierpastenriegel erhalten in einem Verfahren gemäß einem der Ansprüche 1 bis 13.
